# EUROPÄISCHE PATENTSCHRIFT

(11) **EP 1 526 326 B1**
(45) Veröffentlichungstag und Bekanntmachung des Hinweises auf die Patenterteilung: **27.02.2008**
(21) Anmeldenummer: 04024739.7
(22) Anmeldetag: 18.10.2004
(51) Int. Cl.: F21S 8/00, F21V 1/14, F21V 9/08, F21W 131/406

(54) **Vorrichtung zur Beeinflussung von Licht zur Ausleuchtung eines Sets für Filmaufnahmen, Photoaufnahmen, Theater und/oder Bühne**
Light control device for influencing illumination of film sets, theater and stage
Dispositif pour influencer la lumière dans l'éclairage d'un plateau de tournage de film, prise de vues, théâtre ou scène

(30) Priorität: 24.10.2003 DE 20316399 U
(43) Veröffentlichungstag der Anmeldung: 27.04.2005
(73) Patentinhaber: Geller, Wolfgang-Peter, 21476 Garlstorf (DE)
(72) Erfinder: Geller, Wolfgang-Peter, 21476 Garlstorf (DE)
(74) Vertreter: von Eichel-Streiber, Caspar

(56) Entgegenhaltungen:
- WO-A-95/06273
- FR-A- 2 790 061
- GB-A- 2 273 261
- GB-A- 2 352 434
- US-A- 5 953 542
- US-A- 5 975 725

## Beschreibung

Die Erfindung betrifft eine Vorrichtung zur Beeinflussung von Licht zur Ausleuchtung eines Sets für Filmaufnahmen, Photoaufnahmen, Theater und/oder Bühne.

Bei Film- wie Photoaufnahmen ist es erforderlich, die aufzunehmende Szene, das sogenannte Set, in geeigneter Weise zu beleuchten. Hierzu wird in den meisten Fällen nicht allein die natürliche Beleuchtung eingesetzt, sondern es werden künstliche Lichtquellen verwendet bzw. das Sonnenlicht wird mit Hilfe von Reflektoren oder anderen Hilfsmitteln so beeinflußt, daß eine angemessene und aus phototechnischen wie künstlerischen Gesichtspunkten passende Ausleuchtung des Sets erreicht wird.

Ein häufiges Problem bei der Aufnahme von Photos wie Filmen, aber auch im Theater bzw. auf sonstigen Bühnen ist, daß das Licht nicht zu gleichmäßig auf die Szene fallen sollte, da ansonsten die Szene "flach" und in der Beleuchtung langweilig wirkt. Zu diesem Zweck werden z. B. mit Hilfe von Reflektoren oder Spot-Scheinwerfern gezielt Lichtakzente gesetzt. Auch ist es bekannt, eine mit verschiedenen Schattenstrukturen versehene Ausleuchtung, wie sie z.B. bei leicht bewölktem Himmel oder unter einem Baum natürlich entsteht, durch Einbringen von Masken in den Lichtstrahl der Lichtquelle (Sonnenlicht, künstliches Licht) zu simulieren. Diese Masken bestehen dabei aus Holzbrettern oder Metall- bzw. Kunststoffplatten, in die entsprechend den gewünschten Lichtmustern Öffnungen eingebracht, bspw. gestanzt oder gesägt sind. Mit solchen schablonenartigen Masken werden bereits recht gute Lichtakzente verwirklicht. Nachteilig bei dieser Lösung ist allerdings, daß für jede gewünschte Lichtsituation eine eigene Maske angefertigt werden muß. Sie ist für andere Situationen in der Regel nicht mehr einsetzbar.

Grundsätzlich sind auch andere mit Öffnungen versehene Masken, bspw. aus Stoff, denkbar. Diese weisen aber die gleichen Unzulänglichkeiten auf.

Es ist weiter bekannt, Rahmen mit darin gespannten transluzenten Stoffbahnen einzusetzen, um Licht diffuser zu gestalten. Die Stoffbahnen sitzen dabei straff gespannt in den Rahmen, und das Licht wird über die Fläche gleichmäßig abgeschwächt.

In der FR-A-2 790 061 ist ein Lichtprojektor in Form eines würfelförmigen Hohlkörpers offenbart, in dessen Innerem eine Lichtquelle angeordnet werden kann. In einem starren Rahmen sind Trägeschichten angeordnet, die zur Beeinflussung des durch die Würfelflächen hindurch tretenden Lichtes mit unterschiedlichen Licht beeinflussenden Schichten belegt werden können. Diese Druckschrift offenbart somit die im Oberbegriff des Anspruchs 1 genannte Merkmalskombination.

In der WO 95/06273 A wird eine Lichtmaske offenbart, in der lichtundurchlässige Maskenelemente angeordnet und magnetisch fixiert werden können, die der Lichtgestaltung an einer Bühnenszene dienen.

Aufgabe der Erfindung ist es, eine Vorrichtung der eingangs genannten Art dahingehend weiterzubilden, daß mit ihr auf einfache und kostengünstige Weise verschiedene Lichtsituationen darstellbar sind. Die Vorrichtung soll mit anderen Worten für verschiedene Beleuchtungssituationen wieder verwendbar und einfach anpaßbar sein.

Gelöst wird diese Aufgabe mit einer Vorrichtung mit den Merkmalen des Anspruchs 1.

Weitere vorteilhafte Ausgestaltungen sind in den Unteransprüchen angegeben.

Erfindungsgemäß ist in einem Rahmen eine für das zum Ausleuchten des Sets im wesentlichen transparente Trägerschicht angeordnet. Auf dieser Trägerschicht ist zumindest in ausgewählten Bereichen eine Schicht aus einem für das zum Ausleuchten des Sets verwendete Licht undurchlässigen und/oder teilweise durchlässigen Material aufgelegt und von einer zweiten Trägerschicht überdeckt.

Der "Rahmen" ist dabei aus Haltegurten gebildet, in welche die erste Trägerschicht eingefasst ist. Der Rahmen kann insoweit auch als Einfassung bezeichnet werden. Dieser aus Haltegurten gebildete Rahmen kann bspw. wiederum in einen starren aus Metall-, Kunststoff-, Holz- oder ähnlichen Leisten gebildeten Rahmen eingespannt werden. Er kann aber auch direkt z. B. zwischen zwei Gebäude oder ähnliche Befestigungspunkte eingehängt bzw. eingespannt werden.

Die erste Trägerschicht kann z. B. ein durchsichtiges Netz oder eine solche Folie sein. Die erste Trägerschicht ist dabei glatt in dem Rahmen angeordnet. Sie kann insgesamt zur Abschwächung des Lichtes beitragen, wird aber in der Regel nicht zur Lichtgestaltung im Sinne der Licht/Schatten-Akzentuierung beitragen. Auf dieser ersten Trägerschicht kann die Schicht aus dem für das zum Ausleuchten des Sets verwendete Licht undurchlässigen und/oder teilweise durchlässigen Material abgelegt und so zu einem gewissen Grad fixiert werden.

Durch eine passende Anordnung und ggf. Schichtung der Schicht aus dem für das zum Ausleuchten des Sets verwendete Licht undurchlässigen und/oder teilweise durchlässigen Material kann eine einem natürlichen Vorbild nachempfundene oder aus künstlerischer Sicht ansprechende, in der Intensität abwechslungsreiche Ausleuchtung eines Sets geschaffen werden.

Wie in Anspruch 2 formuliert kann die zweite Trägerschicht eine im wesentlichen transparente Schicht sein, die so in den Rahmen einspannbar ist, dass die Schicht aus dem für das zum Ausleuchten des Sets verwendete Licht undurchlässigen und/oder teilweise durchlässigen Material zwischen der ersten und der zweiten Trägerschicht zwischengelegt ist und in ihrer Position von den Trägerschichten gehalten wird. Diese zweite Trägerschicht kann in ihrem Material der ersten Trägerschicht entsprechen und ist im wesentlichen vollständig transluzent. Auch sie kann insgesamt zur Abschwächung des Lichtes beitragen, wird aber in der Regel nicht zur Lichtgestaltung im Sinne der Licht/Schatten-Akzentuierung keinen Beitrag leisten.

In einer Ausgestaltung der Erfindung ist die Schicht aus dem für die für das zum Ausleuchten des Sets verwendete Licht undurchlässigen und/oder teilweise durchlässigen Material eine Stoffbahn oder eine ähnliche flexible Schicht, z. B. eine transluzente Folie, wobei die Stoffbahn bzw. die ähnliche Schicht eine größere Fläche einnimmt als die innerhalb des Rahmens liegende Innenfläche. Dadurch kann die Stoffbahn bzw. die ähnliche Schicht an frei wählbaren Stellen gefaltet und doppelt oder mehrfach übereinander gelegt werden.

Die Stoffbahn bzw. die ähnliche Schicht ist für das verwendete Licht (dies kann künstliches Licht oder auch das Sonnenlicht sein) teilweise durchlässig. Das heißt, es wird der wesentliche Teil des Lichtes durchgelassen, ein Teil jedoch zurückgehalten bzw. reflektiert oder absorbiert. Dadurch, daß ein Teil des Lichtes die Stoffbahn bzw. die ähnliche Schicht bereits in einfacher Lage nicht passieren kann, kann durch doppeltes oder mehrfaches Schichten der Stoffbahn bzw. der ähnlichen Schicht eine verringerte Durchlässigkeit für das Licht erzeugt werden. In der Szene hinter (bzw. unterhalb) der Vorrichtung entstehen so Bereich, die mehr bzw. weniger ausgeleuchtet sind. Es kommt zu einer Beleuchtungssituation, die Licht und Schatten wiedergibt.

Dadurch, dass durch einfachen Faltenwurf in beliebiger Lagigkeit die Menge und der Ort des durchtretenden Lichtes und damit die Ausleuchtungssituation bestimmt werden kann, ist die erfindungsgemäße Vorrichtung sehr flexibel. Sie kann auch noch während der Aufnahmen durch Umarrangieren der Falten bzw. Verwerfungen korrigiert werden.

Auch kann die Vorrichtung nach dem Ende der Aufnahmen in einer bestimmten Beleuchtungssituation für die Darstellung anderer Beleuchtungssituationen wieder verwendet werden. Hierzu wird lediglich das "Faltenmuster" der Stoffbahn bzw. der ähnlichen Schicht entsprechend umstrukturiert.

Alternativ kann die Schicht aus dem für das Ausleuchten des Sets verwendete Licht undurchlässigen und/oder teilweise durchlässigen Material eine aus gerissenen und/oder geschnittenen Papier-, Stoffstücken und/oder Stücken eines ähnlichen für das zum Ausleuchten des Sets verwendete Licht undurchlässigen und/oder teilweise durchlässigen Materials und/oder aus im wesentlichen flachen natürlichen Materialien, wie z.B. Blättern und/oder Federn, gebildete Schicht sein.

Auf diese Weise kann mit einfachen Mitteln z.B. bei der Verwendung von natürlichen oder künstlich aus Papier oder einem ähnlichen Material nachgebildeten Blättern die Lichtsituation, wie sie natürlich unter einem Baum entsteht, nachgebildet werden. Mit vergleichbaren Mitteln können ähnliche natürliche Beleuchtungssituationen nachgebildet werden, oder es können einfach künstlerisch interessante Lichtaspekte ohne natürliches Vorbild geschaffen werden.

Das auf die Trägerschicht aufgelegte Material, z. B. die in der Stoffbahn oder der ähnlichen Schicht eingestellten Falten bzw. Verwerfungen oder die aufgelegten Stücken oder natürlichen Materialien, können durch Heftnähte, Kunststoff-Etikettenhalterfäden oder ähnliches für eine bestimmte Aufnahmesituation fixiert werden.

Im folgenden wird die Erfindung unter Hinweis auf die Zeichnung anhand von Ausführungsbeispielen näher erläutert.

Es zeigen:
- Fig. 1: eine schematische Darstellung einer erfindungsgemäßen Vorrichtung in Draufsicht,
- Fig. 2: eine schematische, dreidimensionale, geschnittene Ansicht der Vorrichtung aus Fig. 1 und deren prinzipielle Wirkweise,
- Fig. 3: eine schematische Darstellung einer erfindungsgemäßen Vorrichtung in einer zweiten Ausführungsvariante in Draufsicht und
- Fig. 4: eine schematische, dreidimensionale, geschnittene Ansicht der Vorrichtung aus Fig. 2 und deren prinzipielle Wirkweise.

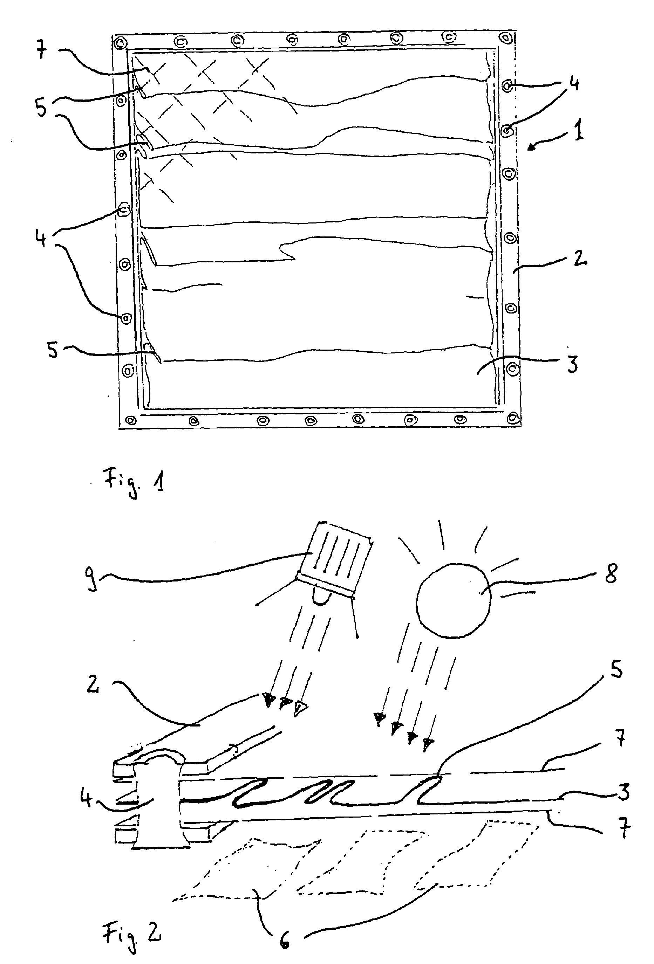

In Fig. 1 ist in einer schematischen Draufsicht eine erfindungsgemäße Vorrichtung 1 zur Beeinflussung von Licht dargestellt. Die Vorrichtung 1 weist einen diese begrenzenden Rahmen 2 auf. Dieser Rahmen ist vorliegend aus vergleichsweise flexiblen Haltegurten gebildet. In dem Rahmen 2 ist eine Stoffbahn 3 angeordnet. Die Stoffbahn 3 ist in den den Rahmen 2 bildenden Haltegurten sind Ösen 4 angeordnet, mit denen der "Gurtrahmen" z.B. in einem starren Rahmen befestigt oder auch nur in einer gewünschten Position an Fixpunkten wie etwa Gebäuden festgelegt werden kann. Die Stoffbahn 3 hat eine größere Fläche als die durch den Rahmen 2 begrenzte Innenfläche. Dadurch kann die Stoffbahn wie dargestellt in einer frei komponierbaren Anordnung gefaltet bzw. mit Verwerfungen 5 versehen werden. Die Stoffbahn 3 ist für das zum Ausleuchten des Sets verwendete Licht teilweise durchlässig. Sie absorbiert bzw. reflektiert jedoch zumindest einen kleinen Teil des Lichtes, so daß durch Übereinanderschichten des Stoffes der Stoffbahn eine verringerte Lichtdurchlässigkeit der Vorrichtung an den Stellen der Verwerfungen 5 erreicht werden kann. Dies führt zu weniger ausgeleuchteten "Schattenstellen" 6 in der Durchsicht der Vorrichtung (s. Fig. 2).

Die Verwerfungen bzw. Falten 5 können von einem Beleuchter frei gestaltet werden, so daß die Ausleuchtung eines Sets mit Hilfe der Vorrichtung 1 variabel gestaltet und an natürliche Beleuchtungsverhältnisse angepaßt werden kann. Zur Fixierung der einmal arrangierten Verwerfungen 5 kann die Stoffbahn 3 in der gewählten Form geheftet bzw. mit wenigen Stichen genäht werden. Bevorzugt wird jedoch eine Fixierung durch unterhalb und oberhalb der Stoffbahn 3 angeordnete Trägerschichten 7 (in Fig. 1 als netzartige Schraffur angedeutet). Diese Trägerschichten 7 sind so weit wie möglich transparent für das verwendete Licht und können bspw. durch Netze oder Folien realisiert werden. Jedoch können auch gezielt solche Trägerschichten eingesetzt werden, die das verwendete Licht in gewünschter Weise abschwächen, in einer Farbe filtern oder sonst wie beeinflussen.

In der Praxis wird die Stoffbahn 3 auf einer ersten Trägerschicht 7 mit den für die gewünschte Ausleuchtung passend arrangierten Verwerfungen 5 angeordnet und anschließend mit der zweiten Trägerschicht 7 abgedeckt und fixiert.

In Fig. 2 ist schließlich mit der Darstellung einer Sonne 8 und einer Kunstlichtleuchte 9 angedeutet, daß die Vorrichtung sowohl mit natürlichem (Sonnen-)licht als auch mit Kunstlicht verwendet werden kann.

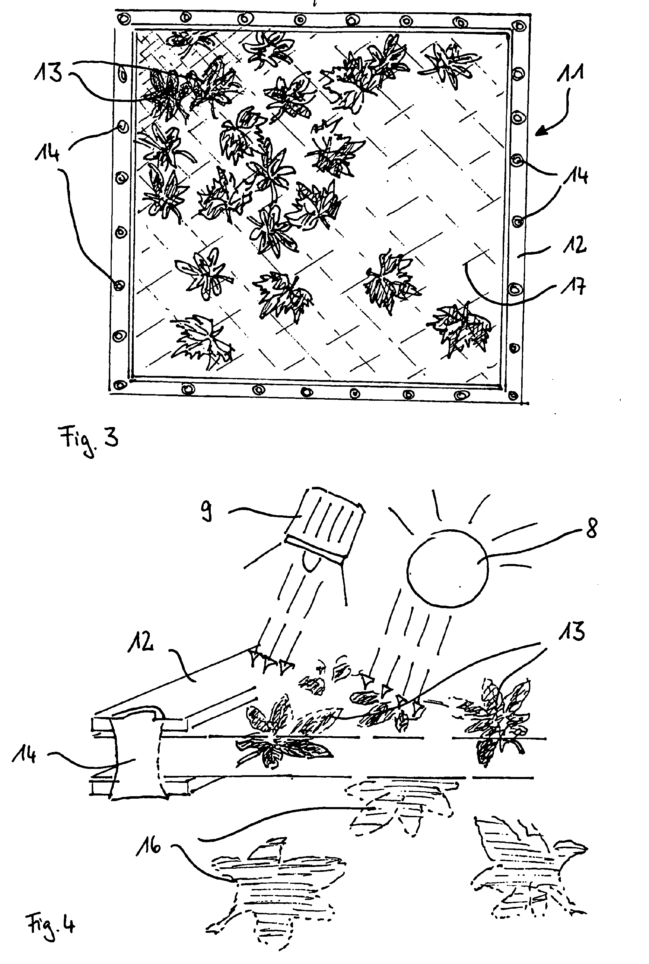

In Fign. 3 und 4 ist eine zweite Ausführungsvariante einer erfindungsgemäßen Vorrichtung 11 zur Beeinflussung von Licht gezeigt. Auch die Vorrichtung 11 weist einen diese begrenzenden Rahmen 12 auf. Auch in dieser Ausführungsform ist der Rahmen aus vergleichsweise flexiblen Haltegurten gebildet. In den den Rahmen 12 bildenden Haltegurten sind Ösen 14 angeordnet, mit denen der "Gurtrahmen" z.B. in einem starren Rahmen befestigt oder auch nur in einer gewünschten Position an Fixpunkten wie etwa Gebäuden festgelegt werden kann. In dem Rahmen 12 sind eine erste und eine zweite Trägerschicht 17 angeordnet. Zwischen diesen Trägerschichten 17 sind in dieser Ausführungsform Blätter 13 angeordnet. Diese sind für das zum Ausleuchten des Sets verwendete Licht nur teilweise durchlässig. Sie absorbieren bzw. reflektieren zumindest einen kleinen Teil des Lichtes, so daß eine verringerte Lichtdurchlässigkeit der Vorrichtung an den Stellen erreicht werden kann, an denen die Blätter aufgelegt sind. Durch Übereinanderschichten der Blätter kann dieser Effekt verstärkt werden. Dies führt zu weniger ausgeleuchteten "Schattenstellen" 16 in der Durchsicht der Vorrichtung (s. Fig. 4).

Die Anordnung der Blätter 13 kann von einem Beleuchter frei gestaltet werden, so daß die Ausleuchtung eines Sets mit Hilfe der Vorrichtung 11 variabel gestaltet und an natürliche Beleuchtungsverhältnisse angepaßt werden kann. Zur Fixierung der einmal arrangierten Blätter 13 können diese an die Trägerschicht 17 geheftet bzw. mit wenigen Stichen angenäht werden. Zusätzlich wird eine Fixierung durch die unterhalb und oberhalb der Blätter 13 angeordneten Trägerschichten 17 (in Fig. 3 als netzartige Schraffur angedeutet) erreicht. Diese Trägerschichten 17 gleichen den oben beschriebenen Trägerschichten 17.

In der Praxis werden die Blätter 13 auf einer ersten Trägerschicht 17 für die gewünschte Ausleuchtung passend arrangierten und anschließend mit der zweiten Trägerschicht 17 abgedeckt und gegebenenfalls zusätzlich durch Heften oder ähnliches fixiert.

In Fig. 4 ist wiederum mit der Darstellung einer Sonne 8 und einer Kunstlichtleuchte 9 angedeutet, daß auch die Vorrichtung 11 sowohl mit natürlichem (Sonnen-)licht als auch mit Kunstlicht verwendet werden kann.

Die Größe der Vorrichtung ist prinzipiell beliebig. Sie muß so groß sein, daß mit ihr nach Möglichkeit die gesamte Szene beleuchtungstechnisch abgedeckt werden kann.

Mit der erfindungsgemäßen Vorrichtung kann auf einfache Weise eine flexibel gestaltbare, natürlichen Beleuchtungsverhältnissen nachempfundene Ausleuchtung einer im Film oder auf einem Photo festzuhaltenden Szene geschaffen werden.

### Bezugszeichenliste

- 1: Vorrichtung
- 2: Rahmen
- 3: Stoffbahn
- 4: Öse
- 5: Verwerfung
- 6: Schattenstelle
- 7: Trägerschicht
- 8: Sonne
- 9: Kunstlichtleuchte
- 11: Vorrichtung
- 12: Rahmen
- 13: Blatt
- 14: Öse
- 16: Schattenstelle
- 17: Trägerschicht

## Patentansprüche

1. Vorrichtung zur Beeinflussung von Licht zur Ausleuchtung eines Sets für Filmaufnahmen, Photoaufnahmen, Theater und/oder Bühne mit einem im wesentlichen ebenen Rahmen (2, 12) sowie einer in dem Rahmen (2, 12) für das zum Ausleuchten des Sets verwendete Licht im wesentlichen transparente erste Trägerschicht (7, 17) und einer auf die erste Trägerschicht aus einem für das zum Ausleuchten des Sets verwendete Licht undurchlässigen und/oder teilweise durchlässigen Material (3, 13) aufgelegten Trägerschicht, wobei die Schicht aus dem für das zum Ausleuchten des Sets verwendete Licht undurchlässigen und/oder teilweise durchlässigen Material (3, 13) zumindest in ausgewählten Bereichen der ersten Trägerschicht (7, 17) auf diese lösbar aufgebracht ist, wobei eine zweite, der ersten Trägerschicht (7, 17) plan gegenüberliegende Trägerschicht (7, 17) vorgesehen ist und dass die Schicht aus dem für das verwendete Licht undurchlässigen und/oder teilweise durchlässigen Material zwischen den beiden Trägerschichten angeordnet ist und **dadurch gekennzeichnet dass** der Rahmen (2, 12) aus miteinander zu einer Einfassung verbundenen Haltegurten gebildet ist, an denen zumindest die erste Trägerschicht (7, 17) festgelegt ist.

2. Vorrichtung nach Anspruch 1, **dadurch gekennzeichnet, dass** die zweite Trägerschicht (7, 17) für das zum Ausleuchten des Sets verwendete Licht im wesentlichen transparent und so in den Rahmen (2, 12) einspannbar ist, dass die Schicht aus dem für das zum Ausleuchten des Sets verwendete Licht undurchlässigen und/oder teilweise durchlässigen Material (3, 13) zwischen der ersten Trägerschicht (7, 17) und der zweiten Trägerschicht (7, 17) zwischengelegt ist und in ihrer Position von den Trägerschichten (7, 17) gehalten wird.

3. Vorrichtung nach einem der Ansprüche 1 oder 2, **dadurch gekennzeichnet, dass** die Schicht aus dem für das zum Ausleuchten des Sets verwendete Licht undurchlässigen und/oder teilweise durchlässigen Material (3, 13) eine in dem Rahmen (2) angeordnete, für das zum Ausleuchten des Sets verwendete Licht teilweise durchlässige Stoffbahn (3) oder einer ähnliche flexible Schicht ist, wobei die Stoffbahn (3) oder ähnliche Schicht eine größere Fläche als die innerhalb des Rahmens (2) liegende Innenfläche aufweist und durch Anbringen von Faltungen bzw. Verwerfungen (5) mehrschichtig gelegt werden kann, so dass in den Bereichen, in denen die Stoffbahn (3) bzw. ähnliche Schicht doppelt oder mehrfach geschichtet liegt, mehr Licht absorbiert wird als in den Bereichen mit einfacher Lage der Stoffbahn (3) bzw. der ähnlichen Schicht.

4. Vorrichtung nach einem der Ansprüche 1 oder 2, **dadurch gekennzeichnet, dass** die Schicht aus dem für das zum Ausleuchten des Sets verwendete Licht undurchlässigen und/oder teilweise durchlässigen Material (3, 13) eine aus gerissenen und/oder geschnittenen Papier-, Stoffstücken und/oder Stücken eines ähnlichen für das zum Ausleuchten des Sets verwendete Licht undurchlässigen und/oder teilweise durchlässigen Materials und/oder aus im wesentlichen flachen natürlichen Materialien, wie z.B. Blättern (13) und/oder Federn, gebildete Schicht ist.

5. Vorrichtung nach einem der Ansprüche 1 bis 4, **dadurch gekennzeichnet, dass** das für das zum Ausleuchten des Sets verwendete Licht undurchlässige und/oder teilweise durchlässige Material (3, 13) an wenigstens der ersten Trägerschicht (7, 17) festgelegt ist.

## Claims

1. Device for influencing light for illuminating a set for photography, cinematography, the theatre and/or stage with a substantially planar frame (2, 12), as well as a first carrier layer (7, 17) substantially transparent for the light used in the frame (2, 12) for illuminating the set and a further carrier layer placed on the first carrier layer and made from a material (3, 13) opaque and/or partly transparent for the light used for illuminating the set, the layer of material (3, 13) opaque and/or partly transparent for the light used for illuminating the set is detachably applied at least in selected areas of the first carrier layer (7, 17) to the latter, where a second carrier layer (7, 17) facing in planar manner the first carrier layer (7, 17) is provided and that the layer of material opaque and/or partly transparent to the light used is positioned between the two carrier layers, **characterized in that** the frame (2, 12) is formed from holding straps interconnected to form an enclosure and to which is secured at least the first carrier layer (7, 17).

2. Device according to claim 1, **characterized in that** the second carrier layer (7, 17) for the light used for illuminating the set is substantially transparent and can be so fixed in the frame (2, 12) that the layer of material (3, 13) opaque and/or partly transparent for the light used for illuminating the set is interposed between the first carrier layer (7, 17) and the second carrier layer (7, 17) and is held in position by said carrier layers (7, 17).

3. Device according to one of the claims 1 or 2, **characterized in that** the layer of the material (3, 13) opaque and/or partly transparent for the light used for illuminating the set is a fabric web (3) partly transparent to the light used for illuminating the set or a similar layer placed in the frame (2), the fabric web (3) or similar layer having a larger surface area than the inner surface located within the frame (2) and can be deposited in multilayer form by making folds or warping structures (5), so that in the areas where the fabric web (3) or similar layer is in double or multiple form more light is absorbed than in the areas with a single layer of the fabric web (3) or similar layer.

4. Device according to one of the claims 1 or 2, **characterized in that** the layer of material (3, 13) opaque and/or partly transparent for the light used for illuminating the set is a layer formed from torn and/or cut paper, fabric pieces and/or pieces of a similar material opaque and/or partly transparent for the light used for illuminating the set and/or of substantially flat, natural material, such as e.g. leaves (13) and/or feathers.

5. Device according to one of the claims 1 to 4, **characterized in that** the material (3, 13) opaque and/or partly transparent for illuminating the set is secured to at least the first carrier layer (7, 17).

## Revendications

1. Dispositif servant à influencer la lumière pour l'éclairage d'un plateau de tournage de film, de prises de vue, de théâtre et/ou de scène avec un cadre essentiellement plat (2, 12) ainsi qu'une première couche porteuse (7, 17) dans le cadre (2, 12) essentiellement transparente à la lumière utilisée pour l'éclairage du plateau et une couche porteuse placée sur la première couche porteuse en un matériau (3, 13) imperméable et/ou partiellement perméable à la lumière utilisée pour l'éclairage du plateau, la couche en matériau (3, 13) imperméable et/ou partiellement perméable à la lumière utilisée pour l'éclairage du plateau étant appliquée de manière amovible au moins dans des zones sélectionnées de la première couche porteuse (7, 17) sur celle-ci, une seconde couche porteuse (7, 17) opposée de manière plane à la première couche porteuse (7, 17) étant prévue, et la couche en matériau imperméable et/ou partiellement perméable à la lumière utilisée étant disposée entre les deux couches porteuses, **caractérisé en ce que** le cadre (2, 12) est formé par des sangles de retenue reliées en un encadrement, sur lesquelles au moins la première couche porteuse (7, 17) est fixée.

2. Dispositif selon la revendication 1, **caractérisé en ce que** la seconde couche porteuse (7, 17) est essentiellement transparente à la lumière utilisée pour l'éclairage du plateau et peut être enserrée dans le cadre (2, 12) de telle sorte que la couche en matériau (3, 13) imperméable et/ou partiellement perméable à la lumière utilisée pour l'éclairage du plateau soit intercalée entre la première couche porteuse (7, 17) et la seconde couche porteuse (7, 17) et soit maintenue dans sa position par les couches porteuses (7, 17).

3. Dispositif selon l'une quelconque des revendications 1 ou 2, **caractérisé en ce que** la couche en matériau (3, 13) imperméable et/ou partiellement perméable à la lumière utilisée pour l'éclairage du plateau est une bande de matière (3) disposée dans le cadre (2), partiellement perméable à la lumière utilisée pour l'éclairage du plateau ou une couche flexible semblable, la bande de matière (3) ou la couche semblable présentant une surface plus grande que la surface intérieure se trouvant dans le cadre (2) et pouvant être placée en pratiquant des pliages ou des déformations (5) sur plusieurs couches de sorte que dans les zones, dans lesquelles la bande de matière (3) ou la couche semblable est revêtue de manière double ou multiple, davantage de lumière soit absorbée que dans les zones pourvues d'une couche simple de bande de matière (3) ou de couche semblable.

4. Dispositif selon l'une quelconque des revendications 1 ou 2, **caractérisé en ce que** la couche en matériau (3, 13) imperméable et/ou partiellement perméable à la lumière utilisée pour l'éclairage du plateau est une couche formée par des morceaux de papier, de tissus déchirés et/ou coupés et/ou des morceaux d'un matériau semblable, imperméable et/ou partiellement perméable à la lumière utilisée pour l'éclairage du plateau et/ou des matériaux naturels essentiellement plats comme par exemple des feuilles (13) et/ou des ressorts.

5. Dispositif selon l'une quelconque des revendications 1 à 4, **caractérisé en ce que** le matériau (3, 13) imperméable et/ou partiellement perméable à la lumière utilisée pour l'éclairage du plateau est fixé sur au moins la première couche porteuse (7, 17).
